# EUROPEAN PATENT SPECIFICATION

(11) **EP 2 737 968 B1**
(45) Date of publication and mention of the grant of the patent: **25.03.2020**
(21) Application number: 12817349.9
(22) Date of filing: 19.06.2012
(51) Int. Cl.: B23D 47/00

(54) **CUTTING MACHINE**
SCHNEIDEMASCHINE
MACHINE À DÉCOUPER

(30) Priority: 27.07.2011 JP 2011164117
(43) Date of publication of application: 04.06.2014
(73) Proprietor: Kanefusa Kabushiki Kaisha, Niwa-gun, Aichi 480-0192 (JP); NORITAKE CO., LIMITED, Nagoya-shi, Aichi-ken (JP)
(72) Inventor: IDE Tsuyoshi, Niwa-gun Aichi 480-0192 (JP); OBA Masaki, Niwa-gun Aichi 480-0192 (JP)
(74) Representative: Maikowski & Ninnemann Patentanwälte Partnerschaft mbB
(86) International application number: PCT/JP2012/065589
(87) International publication number: WO 2013/015042

(56) References cited:
- JP-A- 2 239 901
- JP-A- 7 227 714
- JP-U- H0 340 019
- US-A- 2 941 451
- US-A- 5 398 578

## Description

### Technical Field

The present invention relates to a cutting machine configured to rotate a disc-like tool to cut work by the disc-like tool as per the preamble of claim 1.

### Background Art

The cutting machine disclosed in Japanese Laid-Open Patent Publication No. 2004-338081 is a circular saw. The circular saw has a saw head rotatably retaining a disc-like tool, and a pair of guides provided on the saw head. The pair of guides face both sides of the disc-like tool. Guides having any shape can be selected in accordance with the diameter of the disc-like tool. The guides are set such that the distal ends of the guides and the outer peripheral edge of the disc-like tool are in the vicinity of each other. Alternatively, the guide has a guide main body provided on the saw head, a retaining member tiltably provided on the guide main body, and a contact member mounted to the retaining member so that the contact member faces the disc-like tool. And the angle of the retaining member with respect to the guide main body is fixed prior to cutting such that the tip end portion of the contact member and the outer peripheral edge of the disc-like tool are in the vicinity of each other.

Thus, in the case where the disc-like tool is deflected in the direction of the rotation axis when cutting work (i.e., in the case of curving during sawing), the deflection of the outer peripheral edge of the disc-like tool, which involves a relatively large deflection, is regulated by the pair of guides. As a result, the work can be cut at a right angle with high precision.

US2941451 discloses a cutting machine as per the preamble of claim 1.

### Disclosure of the Invention

### Problem to be solved by the Invention

However, there has been a need for a cutting machine capable of cutting work with higher precision. For example, when the work to be cut by the cutting machine is a metal member, and the short piece obtained through the cutting is to be used as the material for forging, the configuration of the forging is affected by the configuration of the short piece. Thus, there has been a need for a cutting machine capable of shaping the configuration of the short piece with higher precision, that is, capable of cutting work so as to obtain a cut surface at a predetermined angle precisely and smoothly.

### Means for solving the Problem

This problem is solved by a cutting machine comprising the combination of features of claim 1. According to an aspect of the present invention, there is provided a cutting machine configured to cut work by a disc-like tool that is rotated. The cutting machine has a disc-like tool, a saw head, two pairs of guides, and a variable device. The disc-like tool has two sides. The saw head rotatably holds the disc-like tool. The two pairs of guides are provided on the saw head. Each pair of the guides face the two sides of the disc-like tool. The variable device varies the distance between the two pairs of guides such that when an object is to be cut by the disc-like tool, the work passes between the two pairs of guides.

Thus, at the time of cutting, the disc-like tool cuts the work while rotating, and the work passes between the two pairs of guides. The two pairs of guides regulate deflection in the axial direction (curving during sawing) of the disc-like tool at both end sides of a cutting arc of the work. Since the distance between the two pairs of guides is variable, it is possible to make the distance between the two pairs of guides variable according to the configuration of the work. Thus, when the work is to pass between the two pairs of guides, the distance between the two pairs of guides increases thereby, making it possible for the work to pass between the two pairs of guides.

In contrast, in a conventional cutting machine, the distance between the two pairs of guides is fixed from the start so that the work can pass between the two pairs of guides. Thus, the distance between the guides is set to be sufficiently large in conformity with the maximum diameter of the work. Thus, as compared with the conventional cutting machine, the present invention makes it possible to reduce the distance between the two pairs of guides. By reducing the distance between the two pairs of guides, it is possible to reduce the distance between the cutting position and the guides. Thus, it is possible to suppress deflection in the axial direction of the disc-like tool, in particular, deflection in the axial direction of the disc-like tool between the two pairs of guides, which corresponds to the region where the work is cut. As a result, it is possible to cut the work so as to obtain a cut surface at a predetermined angle precisely and smoothly.

### Brief Description of Drawings

FIG. 1 is a front view of a cutting machine;
FIG. 2 is a partial front view of a saw head;
FIG. 3 is a partial perspective view of the cutting machine with a front cover at an open position;
FIG. 4 is an enlarged partial perspective view of the cutting machine;
FIG. 5 is an enlarged partial front view of the cutting machine when the cutting of work is started;
FIG. 6 is an enlarged partial front view of the cutting machine when the work is being cut;
FIG. 7 is a cross-sectional view taken along line VII-VII in FIG. 2;
FIG. 8 is a chart illustrating a relationship between stiffness and a distance between the upper and lower guides;
FIG. 9 is a front view of guides, a disc-like tool, and work in a cutting machine according to another embodiment;
FIG. 10 is a front view of the guides, the disc-like tool, and the work in the cutting machine of FIG. 9 when the cutting of the work is started;
FIG. 11 is a front view of the guides, the disc-like tool, and the work in the cutting machine of FIG. 9 when the work has been cut further than in the state shown in FIG. 10;
FIG. 12 is a front view of the guides, the disc-like tool, and the work in the cutting machine of FIG. 9 when the work has been cut further than in the state shown in FIG. 11;
FIG. 13 is a front view of the guides, the disc-like tool, and the work in the cutting machine of FIG. 9 when the cutting of the work has been completed;
FIG. 14 is a front view of guides, a disc-like tool, and work in a cutting machine according to a comparative example in which a pair of guides are immovably mounted to a saw head; and
FIG. 15 is a chart illustrating a relationship between a depth of cut and a warp of the disc-like tool in the cutting machines of FIGS. 9 and 14.

### Best Mode for carrying out the Invention

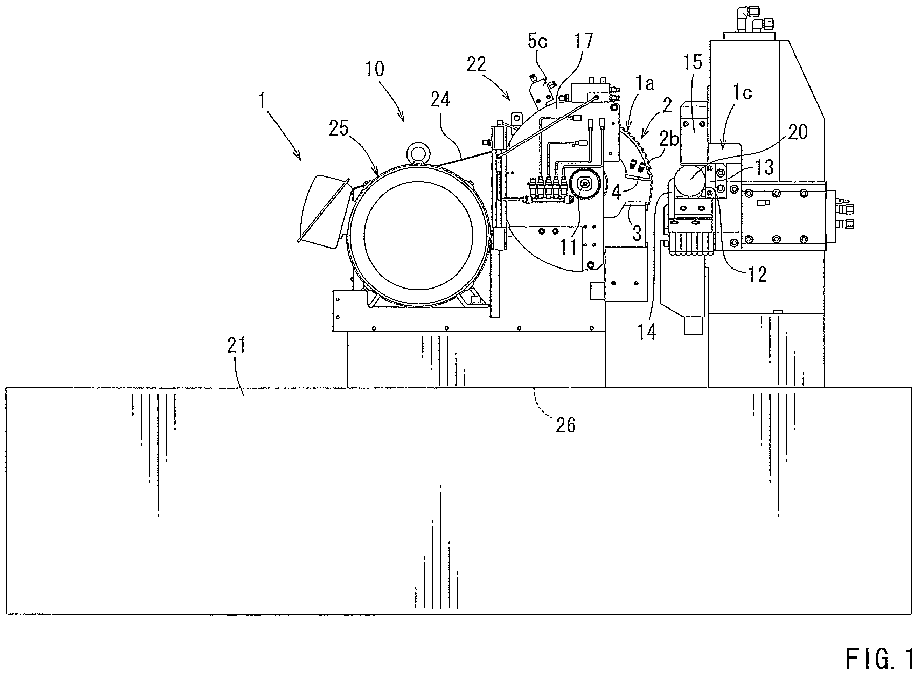

An embodiment of the present invention will be described with reference to FIGS. 1 to 8. As shown in FIG. 1, a cutting machine 1 is a circular saw. The cutting machine 1 has a base 21 and a saw head 10. The saw head 10 is movably mounted to the base 21 through a rail 26 provided on the base 21. The saw head 10 has a head main body 22 and a motor 25. The motor 25 is connected to a drive shaft 11 of the head main body 22 by a belt 24 and a pulley so as to be capable of transmitting force.

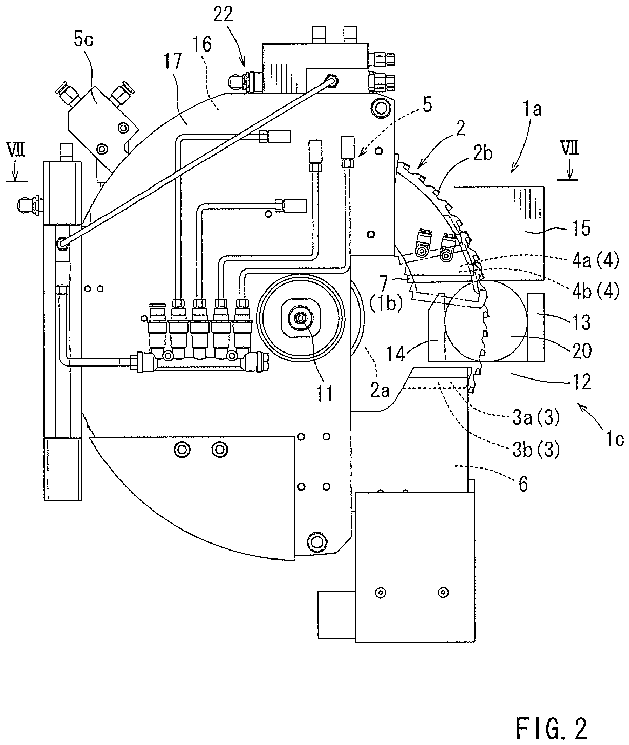

As shown in FIGS. 1 and 2, the head main body 22 has the drive shaft 11, a back cover 16 and a front cover 17. A disc-like tool (saw blade) 2 is attached to the drive shaft 11. The drive shaft 11 is rotated by power from the motor 25, and the disc-like tool 2 is rotated around the drive shaft 11.

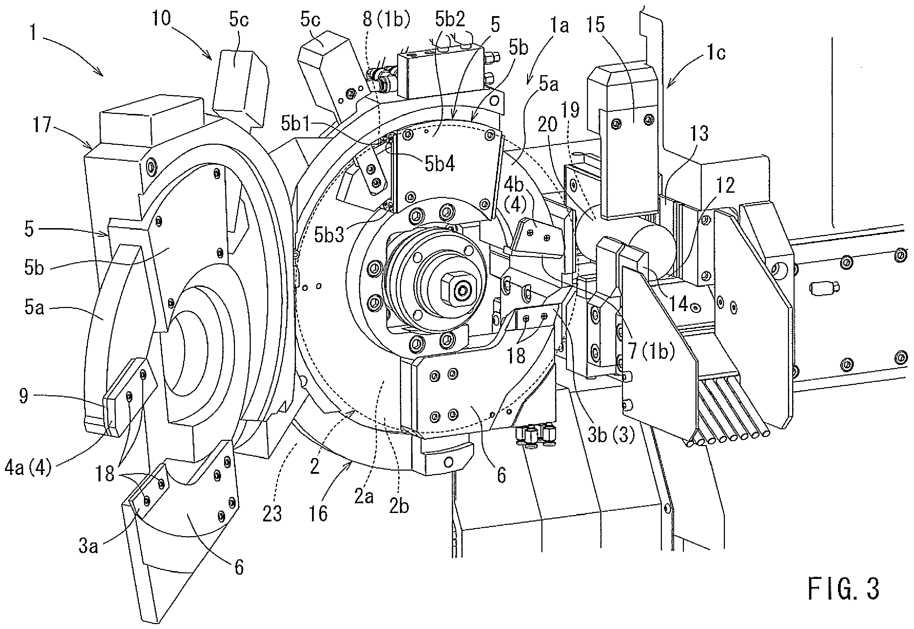

As shown in FIGS. 2 and 3, the disc-like tool is of a disc-like configuration, and has a base metal portion 2a in the central region, and a cutting region 2b in the outer peripheral region thereof. When the disc-like tool 2 is a circular saw blade, a plurality of cutting edges formed of a hard material such as cemented carbide or diamond are attached to the cutting region 2b. When the disc-like tool 2 is an abrasive grinding wheel, diamond grains, cemented carbide grains or the like are glued to the cutting region 2b.

It is desirable for the disc-like tool 2 to be thin. When the disc-like tool 2 is thin, the amount of chips generated at the time of cutting is small. Further, when the disc-like tool 2 is thin, the cutting resistance at the time of cutting is small, and the requisite amount of energy at the time of cutting is small. However, since the disc-like tool 2 is thin, the stiffness in the thickness direction of the disc-like tool 2 is low, and the disc-like tool 2 is subject to deflection in the axial direction at the time of cutting. In contrast, the saw head 10 is provided with a plurality of guides 3 and 4 suppressing deflection in the thickness direction (the axial direction) of the disc-like tool 2.

As shown in FIG. 3, the saw head 10 has the back cover 16 and the front cover 17. The back cover 16 covers the disc-like tool 2 from the back. A guide 3b is mounted to the lower region of the back cover 16 via a mounting member 6. A guide 4b is movably mounted to the upper region of the back cover 16.

As shown in FIG. 3, the front cover 17 is connected to the back cover 16 such that one end portion thereof is rotatable with respect to the back cover 16. The front cover 17 is movable through rotation between a closed position where it covers the front of the disc-like tool 2, and an open position where it opens the front of the disc-like tool 2. A guide 3a is mounted to the lower region of the front cover 17 via a mounting member 6. A guide 4a is movably mounted to the upper region of the front cover 17.

As shown in FIGS. 2 and 3, the back cover 16 and the front cover 17 are provided with a variable device 1a making the distance between the guides 3 and 4 variable. The variable device 1a has a retaining mechanism 5 movably retaining the guides 4 with respect to the saw head 10, and a moving mechanism 1b configured to move the guides 4 according to the configuration of the work 20 at the time of cutting.

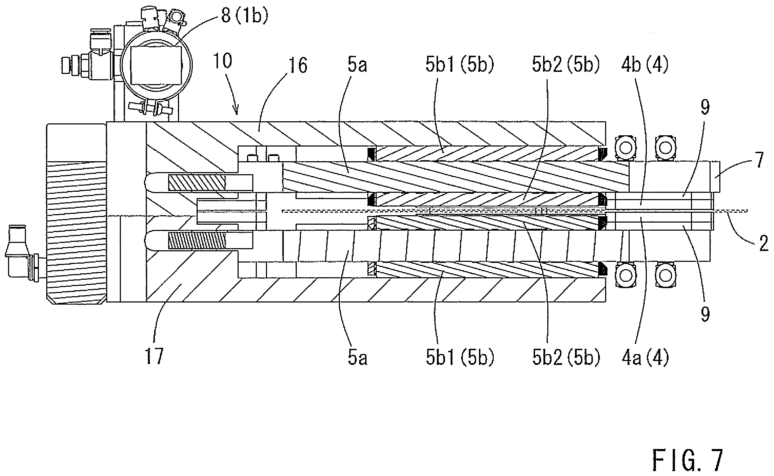

As shown in FIGS. 3 and 7, the retaining mechanism 5 has arms 5a, rails 5b, and connection members 5c. The arms 5a are of a plate-like configuration and extend arcuately. Each of the rails 5b has an arcuately extending hole, and the arms 5a are movably inserted into the holes. Each rail 5b is mounted to the front cover 17 and to the back cover 16. Each rail 5b retains each arm 5a such that the arm 5a is concentrically movable with respect to the rotation of the disc-like tool 2.

As shown in FIGS. 3, 4 and 7, each rail 5b has a back portion 5b1 supporting the arm 5a from the back, a front portion 5b2 supporting the arm 5a from the front, an arcuate lower portion 5b3 supporting the arm 5a from below, and an arcuate upper portion 5b4 covering the arm 5a from above.

As shown in FIG. 3, each connection member 5c is mounted to the distal end portion of each arm 5a. Each connection member 5c extends from each arm 5a radially outward with respect to the disc-like tool 2. The connection members 5c respectively provided on the front cover 17 and on the back cover 16 are integrally connected together by a mounting member when the front cover 17 is at the closed position. As a result, the two arms 5a move integrally with respect to the saw head 10.

As shown in FIG. 7, gap adjustment plates 9 and guides 4 are mounted to the tip end portions of the arms 5a. The gap adjustment plates 9 and the guides 4 are mounted to surfaces of the arms 5a and the surfaces face the disc-like tool 2. The thickness of the gap adjustment plates is determined by the size of the gaps between the guides 4 and the disc-like tool 2.

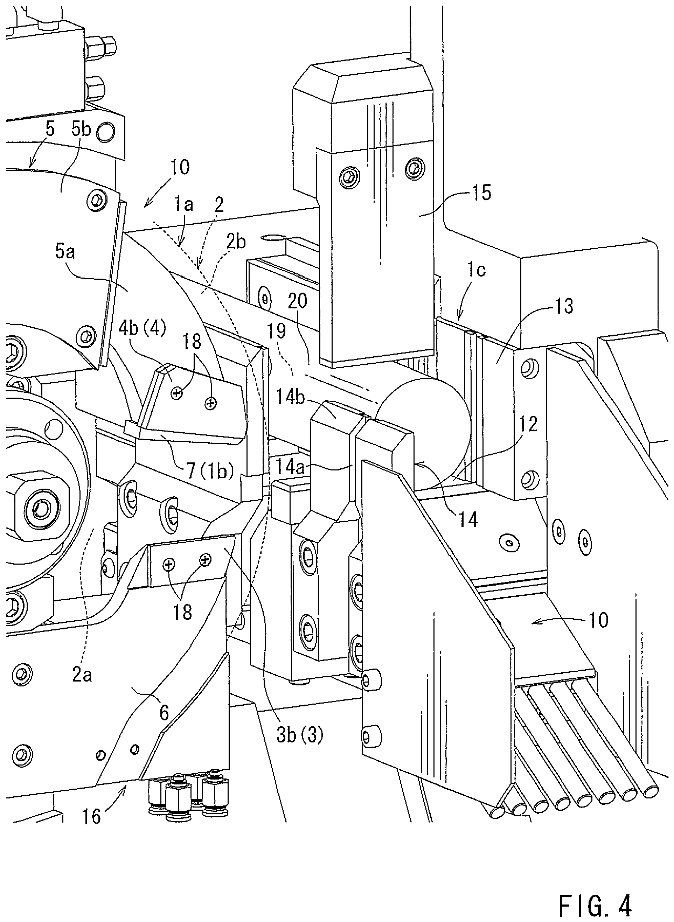

As shown in FIGS. 3 and 4, guides 3a, 3b, 4a and 4b are of a plate-like configuration, and have guide surfaces facing the front side or the back side of the base metal portion 2a of the disc-like tool 2. Small gaps are formed between the guides 3a, 3b, 4a and 4b and the disc-like tool 2. The pair of guides 3a and 3b is provided at a corresponding height and face each other. The disc-like tool 2 is installed between the guides 3a and 3b. The pair of guides 3a and 3b is installed under the work. The tip ends of the guides 3a and 3b are set in the vicinity of the cutting region 2b of the disc-like tool 2.

As shown in FIGS. 3 and 4, the pair of guides 4a and 4b is respectively mounted to the arms 5a at positions where they face each other. Thus, the pair of guides 4a and 4b move together with the arms 5a and always face each other. The disc-like tool 2 is installed between the pair of guides 4a and 4b. The pair of guides 4a and 4b is situated above the other pair of guides 3a and 3b. Before the work 20 is cut, the pair of guides 4a and 4b is situated at the same height as the work 20. At the time of cutting, the pair of guides 4a and 4b is moved upward by the moving mechanism 1b. As a result, the distance between the upper and lower guides 3 and 4 varies.

As shown in FIG. 3, the moving mechanism 1b has a biasing body 8 and a sliding member 7. The biasing body 8 has a cylinder utilizing pneumatic pressure, and is provided on the back of the back cover 16. The biasing body 8 is connected with the connection member 5c provided on the back cover 16, and constantly biases the connection member 5c clockwise. As a result, the arms 5a are biased clockwise by the biasing force of the biasing body, and the upper guides 4 are biased toward the lower guides 3.

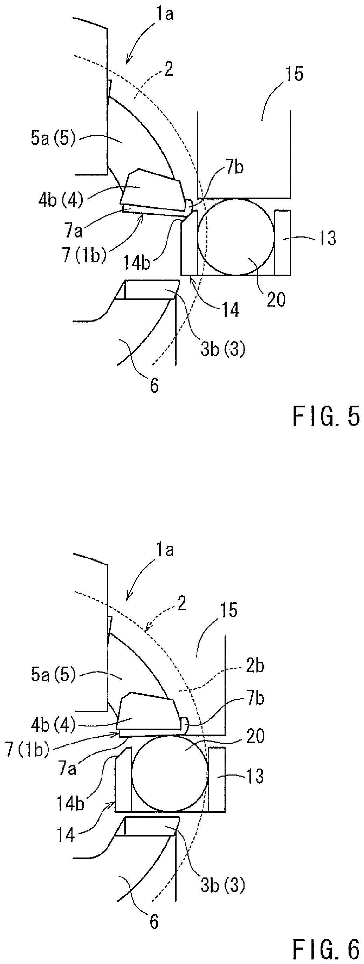

The sliding members 7 are formed of resin. As shown in FIGS. 4 and 5, the sliding members 7 are mounted to the arm 5a mounted to the back cover 16. The sliding member 7 is of an L-shaped configuration, and integrally has a lower side portion 7a and a front end portion 7b. The lower side portion 7a is mounted to the lower side edge of the tip end portion of the arm 5a, and protrudes below the guide 4b. The front end portion 7b is mounted to the front edge of the tip end portion of the arm 5a, and protrudes forwards beyond the guide 4b (in the direction of the work 20).

As shown in FIG. 3, the guides 3 are mounted to the mounting members 6 by bolts 18. Each bolt 18 has a hole, and the mounting members 6 have communication holes communicating with the holes of the bolts 18. Air, oil, or both air and oil in a mist-like state is supplied to the communication holes of the mounting members 6. Air, oil or the like is blown from the guides 3 toward the disc-like tool 2 through the communication holes and the holes of the bolts 18. As a result, the frictional resistance generated when the disc-like tool 2 and the guides 3 contact each other is reduced.

As shown in FIGS. 3 and 7, the guides 4 are mounted to the arms 5a by the bolts 18. The arms 5a have communication holes communicating with the holes of the bolts 18. Air, oil, or both air and oil are supplied to the communication holes of the arms 5a. Air or oil is blown from the guides 4 toward the disc-like tool 2 through the communication holes and the holes of the bolts 18. As a result, the frictional resistance generated when the disc-like tool 2 and the guides 4 contact each other is reduced.

As shown in FIG. 4, the base 21 is provided with a vise device 1c holding the work 20. The vise device 1c has a lower jaw 12, an upper jaw 15, a stationary jaw 13 and a movable jaw 14. The lower jaw 12 is fixed to the base 12, and supports the work 20 from below. The upper jaw 15 is provided so as to be vertically movable with respect to the base 21, and presses the work 20 toward the lower jaw 12. The stationary jaw 13 is fixed to the base 21, and supports the work 20 from one side. The movable jaw 14 is provided so as to be horizontally movable with respect to the base 21, and presses the work 20 toward the stationary jaw 13.

As shown in FIGS. 4 and 5, the movable jaw 14 has a slit 14a and an inclined surface 14b. The disc-like tool 2 is inserted into the slit 14a, which allows the disc-like tool 2 to reach the work 20. The inclined surface 14b is formed at the upper end surface of the movable jaw 14, and is oriented upward and toward the sliding member 7.

As shown in FIG. 4, the work 20 is elongated, and consists of a round bar, a pipe, a plate or the like. The work 20 is formed, for example, of metal (steel, non-ferrous metal or the like) or resin. The cutting machine 1 has a feeding device 19 feeding the work 20 in the longitudinal direction, a releasing device (not shown) configured to move the upper jaw 15 and the movable jaw 14, and a control device (not shown) configured to control the feeding device 19 and the releasing device.

After a small piece is cut from the work 20, the control device controls the releasing device to move the upper jaw 15 and the movable jaw 14 away from the work 20. The control device then uses the feeding device 19 to feed the work 20 by a predetermined length before controlling the releasing device to press the upper jaw 15 and the movable jaw 14 against the work 20. As a result, it is possible for the cutting machine 1 to successively cut a plurality of small pieces from the work 20.

When cutting the work 20 by the cutting machine 1, the work 20 is set in the vise device 1c as shown in FIG. 3. The disc-like tool 2 is set on the drive shaft 11, and the front cover 17 is closed, and the pair of connection members 5c are connected. The disc-like tool 2 is rotated, and the saw head 10 is moved toward the work 20 by a feeding device 23.

As shown in FIGS. 5 and 6, the sliding member 7 contacts the inclined surface 14b of the movable jaw 14, and moves upward along the inclined surface 14b. The disc-like tool 2 contacts the work 20, and gradually cuts the work 20. At the start of the cutting of the work 20, the distance between the upper and lower guides 3 and 4 is relatively small.

Next, as shown in FIGS. 5 and 6, the sliding member 7 contacts the outer peripheral surface of the work 20, and moves upward along the outer peripheral surface of the work 20. As a result, the arms 5a move against the biasing force of the biasing body 8 of FIG. 3, and the upper guides 4 move upward. The upper guides 4 move along the contour of the work 20 while maintaining a predetermined distance between the outer surface of the work 20 and themselves. Thus, the guides 4 do not contact the work 20, and move at a substantially predetermined distance from the outer peripheral surface of the work 20.

As shown in FIGS. 5 and 6, the distance between the upper and lower guides 3 and 4 gradually increases during cutting, allowing the work 20 to enter between the upper and lower guides 3 and 4. The cutting region 2b of the disc-like tool 2 passes through the work 20 to thereby cut the work 20.

When the balance in cutting force between the both sides is lost due to wear or the like, the disc-like tool 2 may undergo axial runout. When the disc-like tool 2 undergoes axial runout, the base metal portion 2a contacts the guides 3 and 4, and the axial runout of the disc-like tool 2 is restricted by the guides 3 and 4.

After a small piece has been cut off the work 20, the control device controls the feeding device 23 to restore the saw head 10 to the former position. The arms 5a are moved by the biasing body 8, and the upper guides 4 move toward the lower guides 3. The control device controls the releasing device and the feeding device 19, and the work 20 moves in the longitudinal direction. The work 20 is held again by the vise device 1c. The work 20 is cut in the same manner as described above to cut a plurality of small pieces off the work 20. Small pieces of the work 20 are used as material, for example, during forging.

An experiment was conducted by using the cutting machine 1. In the experiment, a tipped saw blade (of an outer diameter of 300 mm having a blade thickness of 1.1 mm, a base metal portion thickness of 0.8 mm, a hole diameter of 40 mm, and a number of teeth of 60) was prepared as the disc-like tool 2. An aluminum alloy (A6061 of JIS Standard) having a diameter of 70 mm was prepared as the work 20. The cutting conditions were set to 1250 RPM, a feeding rate of 0.025 mm/tooth, and a clearance between the guides 3 and 4 and the base metal portion 2a of 0.01 mm.

When cutting the work 20 by the cutting machine 1, the upper guides 4 moved upward, and the distance between the upper and lower guides 3 and 4 changed between 60 mm and 98 mm. After the cutting of the work 20 by the cutting machine 1, the cut surface of the work 20 was measured. The measurement result showed that the bending amount of the cut surface was 0.057 mm. In a comparative experiment, the work 20 was cut, with the distance between the guides 3 and 4 being maintained at 100 mm. The bending amount of the work 20 in the comparative experiment was 0.094 mm. Thus, it was found out that it is possible to cut so as to obtain a smooth cut surface of the work 20 by making the distance between the upper and lower guides 3 and 4 variable.

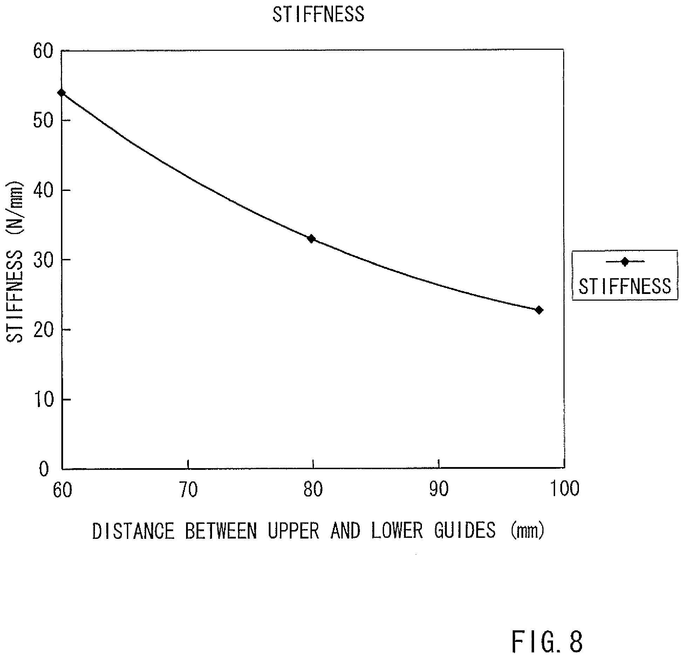

FIG. 8 shows the results of an experiment, illustrating the relationship between the stiffness of the disc-like tool 2 and the distance between the upper and lower guides 3 and 4. In the experiment, the distance between the upper and lower guides 3 and 4 was set to a predetermined distance. A force toward the guides 3 and 4 was applied to the disc-like tool 2. The stiffness (the requisite force for effecting deformation by 1 mm) in the axial direction (thickness direction) of the disc-like tool 2 at an intermediate position between the guides 3 and the guides 4. The measurement results are summarized in FIG. 8. As can be seen in FIG. 8, the smaller the distance between the guides 3 and 4, the higher the stiffness of the disc-like tool 2, and the more difficult it is to deform the disc-like tool 2. Thus, it can be seen that it is desirable to cut the work 20 while making the distance between the guides 3 and 4 as small as possible. Thus, it can be seen that, in the cutting machine 1 according to the present embodiment, it is possible to cut the work 20 while making the distance between the guides 3 and 4 relatively small, so that it is possible to cut the work 20 with high precision.

On the other hand, in the case where the guides are stationary as in the prior art, for example, in the case where the upper and lower guides are stationary, it is necessary to set the distance between the upper and lower guides to a distance not smaller than one allowing at least the work 20 to pass therebetween. Further, taking variation in the diameter of the work 20 into consideration, it is necessary to set the distance between the upper and lower guides larger than the diameter of the work 20. Thus, in the cutting machine in which the guides are stationary, the stiffness of the disc-like tool 2 is rather low. It is not easy to make the angle of the cut surface of the work 20 a predetermined angle (which is normally a right angle). It is not easy to obtain a smooth cut surface.

As described above, as shown in FIGS. 1 and 2, the cutting machine 1 has the disc-like tool 2, the saw head 10, the two pairs of guides 3 and 4, and the variable device 1a. The disc-like tool 2 has two sides. The saw head 10 rotatably retains the disc-like tool 2. The two pairs of guides 3 and 4 are provided on the saw head 10. The guides 3 and 4 of each pair face the both sides of the disc-like tool 2. When the work 20 is to be cut by the disc-like tool 2, the variable device 1 varies the distance between the two pairs of guides 3 and 4 so that the work 20 can pass between the guides 3 and 4.

Thus, at the time of cutting, the disc-like tool 2 cuts the work 20 while rotating, and the work 20 passes between the two pairs of guides 3 and 4. The two pairs of guides 3 and 4 regulate the axial deflection (curving during sawing) of the disc-like tool 2 on both sides (upper and lower sides) of the work 20. Further, since the distance between the two pairs of guides 3 and 4 is variable, it is possible to make the distance between the two pairs of guides variable in accordance with the configuration of the work 20. Thus, when the work 20 passes between the two pairs of guides 3 and 4, it is possible to increase the distance between the guides 3 and 4, allowing the work 20 to pass between the two pairs of guides 3 and 4.

In contrast, in the conventional cutting machine, the distance between the two pairs of guides is fixed from the start such that the work 20 can pass between the two pairs of guides. Thus, the distance between the guides is set sufficiently large in conformity with the maximum diameter of the work 20. Thus, as compared with the conventional cutting machine, that of the present embodiment makes it possible to reduce the distance between the two pairs of guides 3 and 4. Thus, it is possible to suppress axial deflection of the disc-like tool 2, in particular, axial deflection of the disc-like tool 2 between the two pairs of guides, i.e., in the region where the work 20 is cut. As a result, it is possible to cut the work at a predetermined angle precisely and smoothly by the disc-like tool.

As shown in FIG. 3, the variable device 1a further has the retaining mechanism 5 and the moving mechanism 1b. The retaining mechanism 5 movably retains the pair of guides 4 with respect to the saw head 10. The moving mechanism 1b moves the pair of guides 4 in accordance with the configuration of the work 20 to be cut by the disc-like tool 2. Thus, at the time of cutting, the work 20 passes between the guides 3 and 4, and the distance between the two pairs of guides 3 and 4 varies in accordance with the configuration of the work 20. As a result, it is possible for the two pairs of guides 3 and 4 to be situated relatively close to the work 20 at the time of cutting.

As shown in FIG. 3, the moving mechanism 1b further has the biasing body 8 and the sliding member 7. The biasing body 8 biases the pair of guides 4 so as to reduce the distance between the two pairs of guides 3 and 4. The sliding member 7 is provided on the pair of guides 4, and slides while in contact with the work 20 to be cut by the disc-like tool 2. Thus, due to the biasing body 8, the distance between the two pairs of guides 4 and 5 is at a minimum before the cutting. When the work 20 passes between the two pairs of guides 3 and 4 at the time of cutting, the sliding member 7 contacts the work 20. The guides 4 move together with the sliding member 7 against the biasing force of the biasing body 8. The distance between the two pairs of guides 3 and 4 increases. Thus, the distance between the two pairs of guides 3 and 4 is changed in correspondence with the configuration of the work 20.

As shown in FIG. 3, the retaining mechanism 5 further has arms 5a and rails 5b. The pair of guides 4 are attached to the arms 5a. The rails 5b retain the arms 5a such that the arms 5a move in a concentric circle; the center of which is at the center of the disc-like tool 2. Thus, due to the retaining mechanism 5, the guides 4 move concentrically with respect to the disc-like tool 2. Thus, the guides 4 are set so as to move along the cutting region 2b. As a result, it is always possible for the guides 4 to suppress axial runout of the disc-like tool at a position in the vicinity of the cutting region 2b. Thus, it is possible to effectively suppress the axial runout of the disc-like tool 2.

While the embodiments of invention have been described with reference to specific configurations, it will be apparent to those skilled in the art that many alternatives, modifications and variations may be made without departing from the scope of the present invention. Accordingly, embodiments of the present invention are intended to embrace all such alternatives, modifications and variations that may fall within the scope of the appended claims. For example, embodiments of the present invention should not be limited to the representative configurations, but may be modified, for example, as described below.

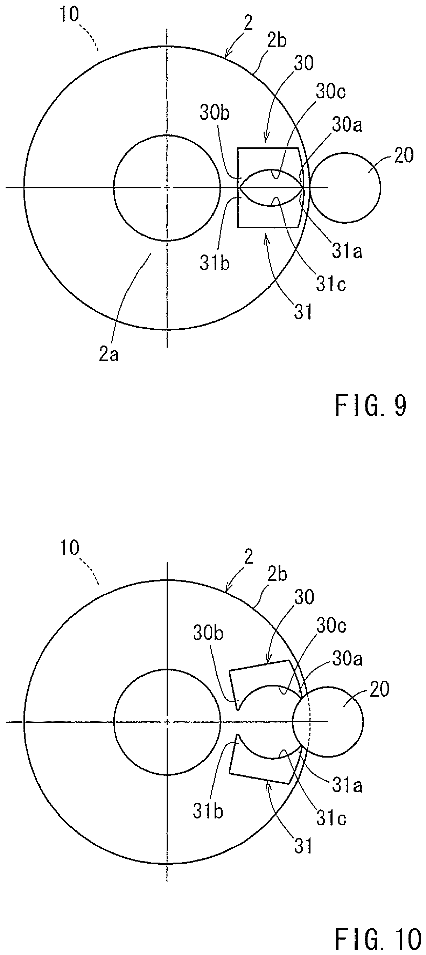

Instead of the cutting machine illustrated in FIGS. 1 to 8, it is also possible to adopt a cutting machine as illustrated in FIGS. 9 to 13. The cutting machine illustrated in FIGS. 9 to 13 has a pair of guides 30, another pair of guides 31, and a variable device (not shown). The pairs of guides 30 and 31 are provided so as to be movable with respect to the saw head 10. The variable device has a retaining mechanism and a moving mechanism. The retaining mechanism retains the guides 30 and 31 such that they are movable with respect to the saw head 10. The moving mechanism moves the guides 30 and 31 in correspondence with the configuration of the work 20 at the time of cutting.

The guides 30 and 31 shown in FIGS. 9 to 13 have first protrusions 30a and 31a, second protrusions 30b and 31b, and recesses 30c and 31c. First protrusion 30a protrudes from an end portion of the guide 30 and towards the other guide 31 on the side of the cutting region 2b of the disc-like tool 2. Second protrusion 30b protrudes from the opposite end portion of the guide 30 and towards the other guide 31 on the side of the center of the disk-like tool. First protrusion 31a protrudes from an end portion of the guide 31 and towards the other guide 30 on the side of the cutting region 2b of the disc-like tool 2. Second protrusion 31b protrudes from the opposite end portion of the guide 31 and towards the other guide 30 on the side of the center of the disk-like tool 2. The recesses 30c and 31c are of a configuration in conformity with the contour of the work 20. The recesses 30c and 31c are of a larger size than the work 20, and exhibit, for example, a radius of curvature larger than the radius of the work 20. As a result, the work 20 is accommodated between the recesses 30c and 31c.

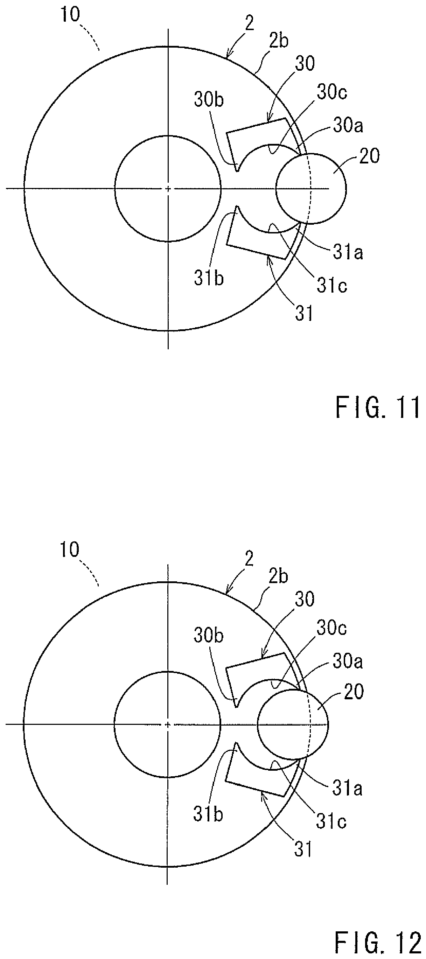

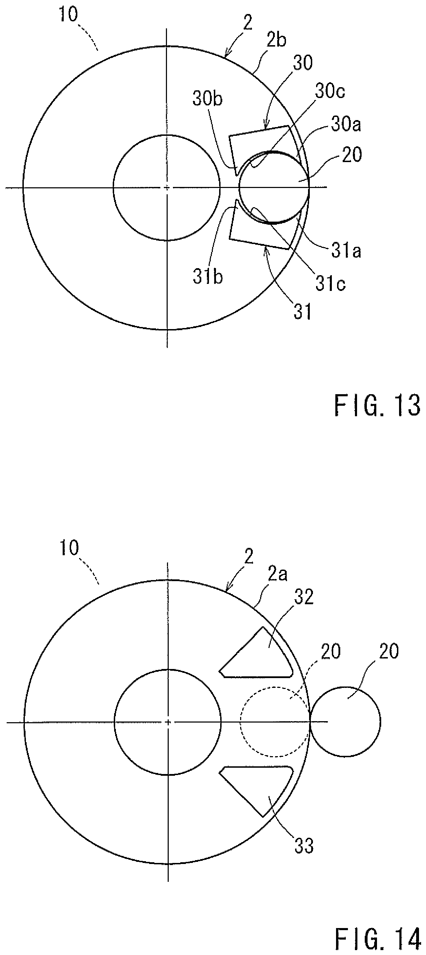

As shown in FIGS. 9 to 11, when the saw head 10 is moved toward the work 20, the guide 30 moves upward in conformity with the configuration of the work 20. The guide 31 moves downward, and the distance between the guides 30 and 31 increases gradually. As shown in FIGS. 12 and 13, after the center of the work 20 gets beyond the line connecting the first protrusions 30a and 31a, the guide 30 moves downward in conformity with the configuration of the work 20, and the guide 31 moves upward. As a result, the distance between the guides 30 and 31 is reduced gradually.

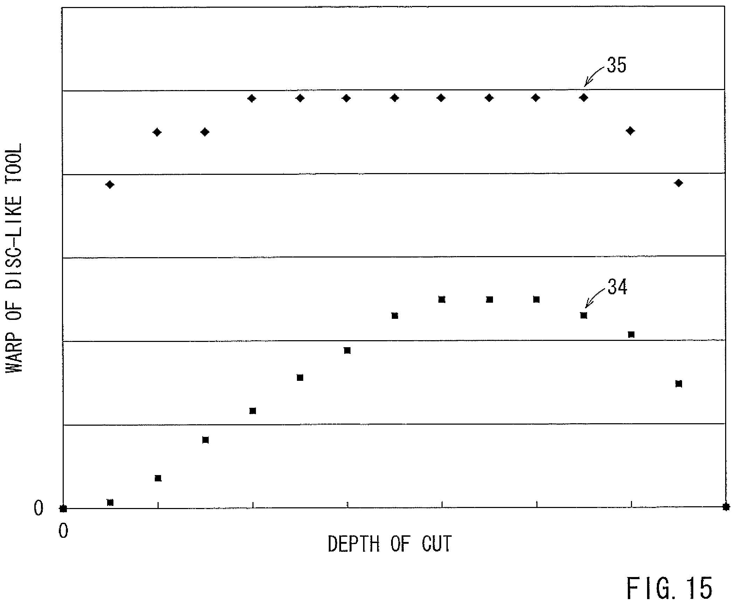

The depth of cut of the work 20 and the warp of the disc-like tool 2 were analyzed. The results of the analysis are plotted in points 34 of FIG. 15. The warp indicated in FIG. 15 is the maximum warp at the tip end portion of the disc-like tool 2 and between the guides 30 and 31. FIG. 14 shows a cutting machine to be compared with the cutting machine shown in FIG. 9. The depth of cut in the case of the cutting machine shown in FIG. 14 and the depth of cut of the disc-like tool 2 thereof were analyzed. The results of the analysis are plotted in points 35 in FIG. 15.

The cutting machine of FIG. 14 has a pair of guides 32 and another pair of guides 33. The pairs of guides 32 and 33 are immovably mounted to the saw head 10. The distance between the guides 32 and 33 is fixed so as to be larger than the maximum diameter of the work 20 intended to be cut. Thus, the distance between the guides 32 and 33 is always kept fixed during the time of cutting.

As shown in FIG. 15, assuming that the cut of depth is the same, the warp in the case of the cutting machine shown in FIG. 9 indicated by points 34 is smaller than that in the case of the cutting machine shown in FIG. 14 indicated by points 35. At the first and last points with respect to points 34 and 35, the depth of cut is zero. The peak value of the warp indicated by points 34 is smaller than that indicated by points 35. The length of time that the peak value continues indicated by points 34 is shorter than that indicated by points 35. The warp increase ratio at the initial stage of depth of cut indicated by points 34 is smaller than that indicated by points 35, with the difference being large.

The saw-curving amount is obtained from an integral of the depth of cut and the warp, and is indicated by a region in FIG. 15. Thus, the saw-curving amount indicated by the region formed by points 34 is smaller than that indicated by the region formed by points 35. The former is approximately a quarter of the latter. That is, the saw-curving amount in the case of the cutting machine of FIG. 9 is smaller than that in the case of the cutting machine of FIG. 15. It can be seen, from FIG. 15, that the main reason for this lies in the difference in the warp increase ratio at the initial stage of depth of cut.

As shown in FIG. 3, the variable device 1a may have the retaining mechanism 5 which retains the upper guides 4 and the moving mechanism 1b which moves the guides 4. Instead of the retaining mechanism 5 and the moving mechanism 1b, the variable device 1a may have a retaining mechanism for retaining the lower guides 3 and a moving mechanism for moving the lower guides 3.

The moving mechanism 1b may have the biasing body 8 and the sliding member 7. Alternatively, the moving mechanism 1b may have a drive mechanism for moving the arms 5a and a control device for controlling the drive mechanism. The control device controls the drive mechanism based on work information previously input or a detection signal from a sensor for measuring the configuration of the work. As a result, it is possible to move the guides 4 together with the arms 5a in correspondence with the configuration of the work 20.

The moving mechanism 1b may move the guides 4 in conformity with the contour of the work 20. Alternatively, it may move the guides 4 in conformity with the general configuration of the contour of the work 20. Alternatively, it also may move the guides 4 gently in conformity with the configuration of the work 20.

The retaining mechanism 5 may retain the guides 4 so as to allow them to move in a circle concentric with the disc-like tool 2. Alternatively, the retaining mechanism 5 may retain the guides 4 so as to allow them to move in a curve akin to a circle concentric with the disc-like tool 2 or in a straight line.

The biasing body 8 may have a cylinder configured to generate a biasing force through pneumatic pressure. Alternatively, the biasing body 8 may consist of a spring or rubber generating a biasing force through a resilient force. Alternatively, the biasing body 8 may consist of a gas spring configured to generate a biasing force through gas pressure.

The disc-like tool 2 may have the cutting region 2b at the outer peripheral edge thereof. Alternatively, the disc-like tool 2 may have the cutting region at the inner peripheral edge thereof.

The cutting machine 1 may have two pairs of guides 3 and 4. Alternatively, the cutting machine 1 may have three or more pairs of guides.

## Claims

1. A cutting machine configured to rotate a disc-like tool (2) and to cut work (20) by the disc-like tool (2), comprising:
a disc-like tool (2) having two sides;
a saw head (10) rotatably retaining the disc-like tool (2);
two pairs of guides (3, 4) provided on the saw head (10), the guides (3, 4) of each pair facing the two sides of the disc-like tool (2); and
a variable device (1a) configured to vary a distance between the two pairs of guides (3, 4) so that the work (20) can pass between the two pairs of guides (3, 4) when the work (20) is to be cut by the disc-like tool (2),
**characterized**
**in that** the variable device (1a) is able to gradually change the distance between the two pairs of guides (3, 4) according to the configuration of the work (20) while the work (20) is being cut, wherein the variable device (1a) further comprises:
a retaining mechanism (5) configured to movably retain at least one pair of guides (3, 4) with respect to the saw head (10), and
a moving mechanism (1b) configured to move the at least one pair of guides (3, 4) in accordance with a configuration of the work (20) while the work is being cut by the disc-like tool (2).

2. The cutting machine of claim 1, wherein the moving mechanism (1a) further comprises:
a biasing body (8) configured to bias the at least one pair of guides (3, 4) so as to reduce the distance between the two pairs of guides (3, 4), and
a sliding member (7) provided on the at least one pair of guides (3, 4) and configured to slide while in contact the work (20) while the work is being cut by the disc-like tool (2).

3. The cutting machine of claim 2, wherein the retaining mechanism (5) comprises:
an arm (5a) to which the at least one pair of guides (3, 4) is attached, and
a rail (5b) retaining the arm (5a) so as to allow the arm (5a) to move in a concentric circle a center of which is at a center of the disc-like tool (2).

## Patentansprüche

1. Schneidemaschine, die dazu konfiguriert ist, ein scheibenartiges Werkzeug (2) zu drehen und durch das scheibenartige Werkzeug (2) ein Werkstück (20) zu schneiden, umfassend:
ein scheibenartiges Werkzeug (2) mit zwei Seiten;
einen Sägekopf (10), der das scheibenartige Werkzeug (2) festhält;
zwei Paare Führungen (3, 4), die an dem Sägekopf (10) vorgesehen sind, wobei die Führungen (3, 4) jedes Paars zu den beiden Seiten des scheibenartigen Werkzeugs (2) weisen; und
eine variable Vorrichtung (1a), die dazu konfiguriert ist, einen Abstand zwischen den beiden Paaren Führungen (3, 4) zu variieren, so dass das Werkstück (20) zwischen den beiden Paaren Führungen (3, 4) passieren kann, wenn das Werkstück (20) durch das scheibenartige Werkzeug (2) geschnitten werden soll,
**dadurch gekennzeichnet, dass**
die variable Vorrichtung (1a) den Abstand zwischen den beiden Paaren Führungen (3, 4) gemäß der Konfiguration des Werkstücks (20) allmählich ändern kann, während das Werkstück (20) geschnitten wird,
wobei die variable Vorrichtung (1a) ferner Folgendes umfasst:
einen Haltemechanismus (5), der dazu konfiguriert ist, mindestens ein Paar Führungen (3, 4) bezüglich des Sägekopfs (10) beweglich festzuhalten, und
einen Bewegungsmechanismus (lb), der dazu konfiguriert ist, das mindestens eine Paar Führungen (3, 4) gemäß einer Konfiguration des Werkstücks (20) zu bewegen, während das Werkstück durch das scheibenartige Werkzeug (2) geschnitten wird.

2. Schneidemaschine nach Anspruch 1, wobei der Bewegungsmechanismus (1a) ferner Folgendes umfasst:
einen Vorspannungskörper (8), der dazu konfiguriert ist, das mindestens eine Paar Führungen (3, 4) vorzuspannen, um den Abstand zwischen den beiden Paaren Führungen (3, 4) zu reduzieren, und
ein Gleitelement (7), das an dem mindestens einem Paar Führungen (3, 4) vorgesehen ist und dazu konfiguriert ist, zu gleiten, während es mit dem Werkstück (20) in Kontakt ist, während das Werkstück durch das scheibenartige Werkzeug (2) geschnitten wird.

3. Schneidemaschine nach Anspruch 2, wobei der Haltemechanismus (5) Folgendes umfasst:
einen Arm (5a), an dem das mindestens eine Paar Führungen (3, 4) befestigt ist, und
eine Schiene (5b), die den Arm (5a) festhält, um dem Arm (5a) zu gestatten, sich in einem konzentrischen Kreis zu bewegen, dessen Mitte sich in einer Mitte des scheibenartigen Werkzeugs (2) befindet.

## Revendications

1. Machine de coupe configurée pour faire tourner un outil de type disque (2) et pour couper un ouvrage (20) par l'outil de type disque (2), comprenant:
un outil de type disque (2) ayant deux côtés;
une tête de scie (10) retenant de manière rotative l'outil de type disque (2);
deux paires de guides (3, 4) prévus sur la tête de scie (10), les guides (3, 4) de chaque paire faisant face aux deux côtés de l'outil de type disque (2); et
un dispositif variable (la) configuré pour faire varier une distance entre les deux paires de guides (3, 4) de telle sorte que l'ouvrage (20) puisse passer entre les deux paires de guides (3, 4) lorsque l'ouvrage (20) est en train d'être coupé par l'outil de type disque (2),
**caractérisée en ce que**
le dispositif variable (la) est capable de modifier progressivement la distance entre les deux paires de guides (3, 4) en fonction de la configuration de l'ouvrage (20) alors que l'ouvrage (20) est en train d'être coupé, le dispositif variable (la) comprenant en outre:
un mécanisme de retenue (5) configuré pour retenir de manière déplaçable au moins une paire de guides (3, 4) par rapport à la tête de scie (10), et
un mécanisme de déplacement (1b) configuré pour déplacer l'au moins une paire de guides (3, 4) en fonction d'une configuration de l'ouvrage (20) alors que l'ouvrage est en train d'être coupé par l'outil de type disque (2).

2. Machine de coupe selon la revendication 1, dans laquelle le mécanisme de déplacement (la) comprend en outre:
un corps de sollicitation (8) configuré pour solliciter l'au moins une paire de guides (3, 4) de manière à réduire la distance entre les deux paires de guides (3, 4); et
un élément coulissant (7) prévu sur l'au moins une paire de guides (3, 4) et configuré pour coulisser alors qu'il est en contact avec l'ouvrage (20) alors que l'ouvrage est en train d'être coupé par l'outil de type disque (2).

3. Machine de coupe selon la revendication 2, dans laquelle le mécanisme de retenue (5) comprend:
un bras (5a) auquel est attachée l'au moins une paire de guides (3, 4), et
un rail (5b) retenant le bras (5a) de manière à permettre au bras (5a) de se déplacer suivant un cercle concentrique dont un centre est au centre de l'outil de type disque (2).
